# EUROPEAN PATENT APPLICATION

(11) **EP 4 528 498 A1**
(43) Date of publication of application: **26.03.2025**
(21) Application number: 23910169.4
(22) Date of filing: 14.12.2023
(51) Int. Cl.: G06F 9/451

(54) **PAGE DISPLAY METHOD AND APPARATUS, DEVICE, COMPUTER READABLE STORAGE MEDIUM AND PRODUCT**

(30) Priority: 30.12.2022 CN 202211731258
(71) Applicant: Beijing Zitiao Network Technology Co., Ltd., Beijing 100190 (CN)
(72) Inventor: SHU, Siqi, Beijing 100028 (CN); SUN, Yiping, Beijing 100028 (CN)
(74) Representative: Grünecker Patent- und Rechtsanwälte PartG mbB
(86) International application number: PCT/CN2023/138706
(87) International publication number: WO 2024/140239

(57) **Abstract**

Embodiments of the present disclosure provide a method, apparatus, device, computer readable storage medium and product for interface display. The method comprises: in response to input information generated in a session interface associated with a first user and at least one second user, a media content acquisition control matching the input information is displayed in the session interface. In response to a first triggering performed by the first user on the media content acquisition control, a media content acquisition interface is displayed, and the input information is displayed in the media content acquisition interface. A target media content generated by the first user in the media content acquisition interface is acquired, and the target media content is sent into the session interface.

## Description

This application claims priority to Chinese Patent Application No. 202211731258. X, entitled "METHOD, APPARATUS, DEVICE, COMPUTER READABLE STORAGE MEDIUM AND PRODUCT FOR INTERFACE DISPLAY", filed on Dec. 30, 2022, the entirety of which is incorporated herein by reference.

### FIELD

Embodiments of the present disclosure relate to the technical field of computers, in particular to a method, apparatus, device, computer readable storage medium and product for interface display.

### BACKGROUND

Currently, many application software provide instant messaging functions, so that users can communicate with friends more conveniently. However, the existing instant messaging function can only achieve information interaction based on text, audio and other forms in a session interface. Often, the display content and interaction manners are relatively single.

### SUMMARY

The embodiments of the present disclosure provide a method, apparatus, device, computer readable storage medium and product for interface display, to solve the technical problem that the session interface for the existing instant messaging function is displayed less in content and the interaction mode is simple.

In a first aspect, the embodiments of the present disclosure provide a method of interface display, including: in response to input information generated in a session interface associated with a first user and at least one second user, displaying, in the session interface, a media content acquisition control matching the input information; in response to a first triggering performed by the first user on the media content acquisition control, displaying a media content acquisition interface, and displaying the input information in the media content acquisition interface; and acquiring a target media content generated by the first user in the media content acquisition interface, and sending the target media content into the session interface.

In a second aspect, the embodiments of the present disclosure provide an apparatus for interface display, including: a display module, configured to, in response to input information generated in a session interface associated with a first user and at least one second user, display in the session interface a media content acquisition control matching the input information; a processing module, configured to, in response to a first triggering performed by the first user on the media content acquisition control, display a media content acquisition interface, and display the input information in the media content acquisition interface; and a sending module, configured to acquire a target media content generated by the first user in the media content acquisition interface, and send the target media content into the session interface.

In a third aspect, the embodiments of the present disclosure provide an electronic device, including a processor and a memory. The memory stores computer executable instructions. The processor executes the computer executable instructions stored in the memory, to enable the at least one processor to perform the method of interface display according to the first aspect and various possible designs of the first aspect.

In a fourth aspect, the embodiments of the present disclosure provide a computer readable storage medium having stored computer executable instructions that, when executed by a processor, implement the method of interface display according to the first aspect and various possible designs of the first aspect.

In a fifth aspect, the embodiments of the present disclosure provide a computer program product, including a computer program which, when executed by a processor, implements the method of interface display according to the first aspect and various possible designs of the first aspect.

### BRIEF DESCRIPTION OF DRAWINGS

In order to more clearly illustrate the embodiments of the present disclosure or the technical solutions in the prior art, the accompanying drawings used in the description of the embodiments or the prior art will be briefly introduced below, and it will be apparent that the drawings in the following description are some embodiments of the present disclosure, and those skilled in the art may also acquire other drawings according to these drawings without creative labor.
FIG. 1 is a schematic flowchart of a method of interface display provided by the embodiments of the present disclosure;
FIG. 2 is a schematic diagram of interface interaction provided by the embodiments of the present disclosure;
FIG. 3 is a schematic flowchart of a further method of interface display provided by the embodiments of the present disclosure;
FIG. 4 is a schematic diagram of a display interface provided by the embodiments of the present disclosure;
FIG. 5 is a schematic diagram of a display interface provided by the embodiments of the present disclosure;
FIG. 6 is a schematic diagram of interface interaction provided by the embodiments of the present disclosure;
FIG. 7 is a schematic flowchart of a further method of interface display provided by the embodiments of the present disclosure;
FIG. 8 is a schematic diagram of a further interface interaction provided by the embodiments of the present disclosure;
FIG. 9 is a schematic diagram of a further interface interaction provided by the embodiments of the present disclosure;
FIG. 10 is a schematic structural diagram of an apparatus for interface display provided by the embodiments of the present disclosure; and
FIG. 11 is a schematic structural diagram of an electronic device provided by the embodiments of the present disclosure.

### DETAILED DESCRIPTION

In order to make the objectives, technical solutions and advantages of the embodiments of the present disclosure clearer, the technical solutions in the embodiments of the present disclosure will be clearly and completely described below with reference to the accompanying drawings in the embodiments of the present disclosure. Apparently, the embodiments described are a part of the embodiments of the present disclosure, not the entire embodiments. All other embodiments acquired by those skilled in the art based on the embodiments of the present disclosure without creative efforts shall fall within the scope of the present disclosure.

The technical solutions of the present disclosure and the technical solutions of the present disclosure will be described in detail below with reference to specific embodiments. The following specific embodiments may be combined with each other, and the same or similar concepts or processes may be omitted in some embodiments. The embodiments of the present disclosure will be described in detail below with reference to the accompanying drawings.

To solve the technical problem that the session interface for the existing instant messaging function is displayed less in content and the interaction mode is simple, the present disclosure provides a method, apparatus, device, computer readable storage medium and product for interface display.

It should be noted that the method, apparatus, device, computer readable storage medium and product for interface display provided by the present disclosure may be applied to a scenario displayed in any session interface.

In the related art, chat history and chat dialogue input boxes are generally displayed in the session interface, so that the user can perform information interaction based on text, audio and other forms in a session interface. However, the display content and interaction manners are relatively single. In addition, if the user needs to generate the media content matching the content currently input, the user needs to manually find the interface of the media content generation function in the application software, and manually search for contents such as an effect or filter matching the content currently input, and then generate the media content. Often operations are cumbersome, resulting in poor interaction efficiency.

To enable the user to implement more interactive operations in the session interface, in response to input information generated by the first user in a session interface, a media content acquisition control matching the input information may be displayed in the session interface based on the input information. Therefore, the user can generate a target media content related to the input information based on the media content acquisition control, and the efficiency of target media content generation is improved. In addition, the display content and interaction manner in the session interface can be enriched.

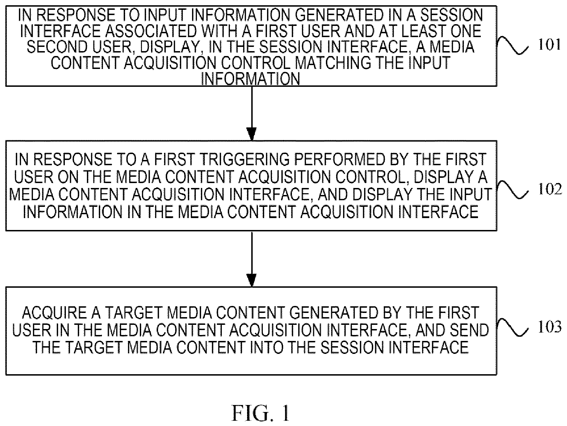

FIG. 1 is a schematic flowchart of a method of interface display provided by the embodiments of the present disclosure. As shown in FIG. 1, the method includes the following steps.

At Step 101: in response to input information generated in a session interface associated with a first user and at least one second user, display, in the session interface, a media content acquisition control matching the input information.

The execution body of this embodiment is an apparatus for interface display, and the apparatus for interface display may be coupled to a terminal device, so that a interface display can be performed according to a triggering performed by the first user on the terminal device. Alternatively, the apparatus for interface display may also be coupled to a server. The server can be in communication connection with the terminal device, so that the terminal device can be controlled to perform the interface display based on the triggering performed by the first user on the terminal device.

In this embodiment, the first user may perform a session with at least one second user in the session interface. The session interface may be a one-on-one chat session interface between the first user and the second user or may be a group chat session interface between the first user and a plurality of second users.

A content input box may be provided in the session interface, and the first user may generate input information in the content input box. The input information may include text information, audio information, video information, expression information, and the like. Optionally, if the input information is audio information or video information, the audio information and the video information may be parsed to determine text information corresponding to the audio information and the video information.

Further, after acquiring the input information generated by the first user in the session interface, the media content acquisition control may be displayed in the session interface, so that the first user performs the generation of the target media content based on the media content acquisition control.

Optionally, in order to enable the user to generate the target media content matching the input information, after acquiring the input information, the media content acquisition control matching the input information may be displayed in the session interface.

At Step 102: in response to a first triggering performed by the first user on the media content acquisition control, display a media content acquisition interface, and display the input information in the media content acquisition interface.

In this implementation, the first user may perform the generation of the target media content associated with pre-input information based on the media content acquisition control. Optionally, the media content acquisition interface may be displayed in response to a first triggering performed by the first user on the media content acquisition control, so that the first user can perform generation and editing of the target media content in the media content acquisition interface. The first triggering includes, but is not limited to, a single-click, a double-click, a drag, and the like, and the first user may customize the first triggering according to actual requirements, which is not limited in the present disclosure.

In addition, after the media content acquisition interface is displayed, the input information may be further displayed in the media content acquisition interface. Optionally, the input information may be displayed within a predetermined display area in a predetermined display style, and the first user may adjust the display style of the input information according to actual requirements, which is not limited in the present disclosure.

By displaying the input information in the media content acquisition interface, the generated target media content can be enabled to carry the input information, the target media content associated with the input information can be quickly generated, and the generation efficiency of the target media content is improved.

At Step 103: acquire a target media content generated by the first user in the media content acquisition interface, and send the target media content into the session interface.

In this embodiment, after jumping to the media content acquisition interface, the first user may generate the target media content in the media content acquisition interface. Optionally, the media content acquisition interface may be set with a content acquisition control, and the first user may implement the generation of the target media content by triggering the content acquisition control. The content acquisition control includes, but is not limited to, a content uploading control and a content collection control.

It should be noted that the target media content generated in the media content acquisition interface may include the input information. Alternatively, if the deletion on the input information in the editing process of the target media content by the first user is detected, the target media content may not include the input information.

Further, after acquiring the target media content, the target media content may be sent into the session interface, so that the at least one second user can view the target media content. Optionally, after the generation of the target media content is completed, a predetermined sending control may be displayed in the media content acquisition interface. In response to a triggering performed by the first user on the sending control, the target media content is sent into the session interface.

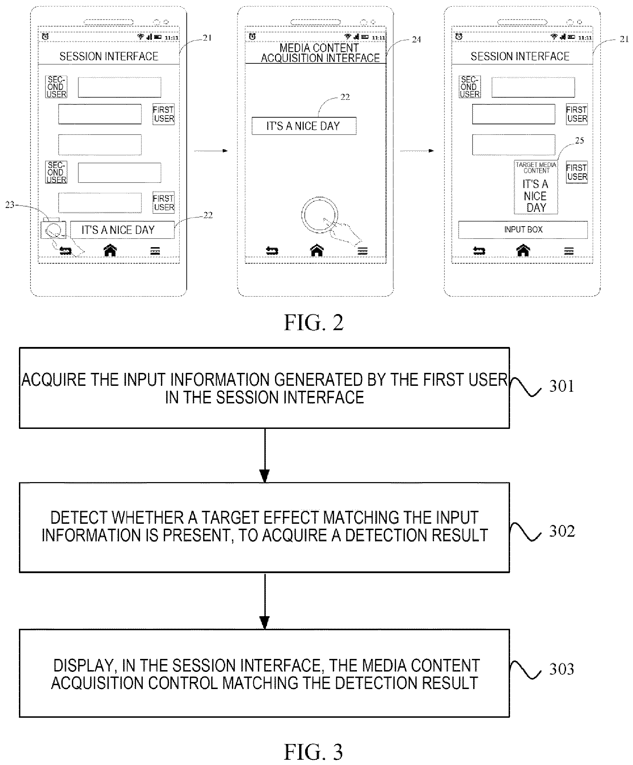

FIG. 2 is a schematic diagram of interface interaction provided by the embodiments of the present disclosure. As shown in FIG. 2, input information 22 generated by the first user in a session interface 21 is acquired. The input information 22 may be "It's a nice day". A media content acquisition control 23 matching the input information 22 is displayed in the session interface 21. In response to a triggering performed by the first user on the media content acquisition control 23, a media content acquisition interface 24 may be jumped to. The input information 22 "It's a nice day" is displayed in the media content acquisition interface 24. In response to a media content generation triggered by the first user on the media content acquisition interface 24, a target media content 25 may be acquired, and the target media content 25 may be sent into the session interface 21. The target media content 25 may include the input information 22.

The method of interface display provided in this embodiment, by acquiring the input information generated by the first user in the session interface and displaying the media content acquisition control matching the input information in the session interface, enables the first user to generate the target media content based on the media content acquisition control, which may also include the input information generated by the first user. The display content in the session interface can be more diversified, and the interaction mode of the session interface can be enriched. Therefore, the first user can generate the target media content matched with the input content based on the content currently input, the generation efficiency of the target media content is improved, and the interaction efficiency is improved.

FIG. 3 is a schematic flowchart of a method of interface display according to still another embodiment of the present disclosure. As shown in FIG. 3, Step 101 includes the following steps.

At Step 301: acquire the input information generated by the first user in the session interface.

At Step 302: detect whether a target effect matching the input information is present, to acquire a detection result.

At Step 303: display, in the session interface, the media content acquisition control matching the detection result.

In this embodiment, in response to a content input by the first user in the session interface, the input information generated by the first user in the session interface may be acquired. The input information may include text information, audio information, video information, expression information, and the like. Optionally, if the input information is audio information and video information, the audio information and video information may be parsed to determine text information corresponding to the audio information and video information.

Further, whether the target effect matching the input information is present may be detected to acquire a detection result. Optionally, it may be detected whether the input information matches identification information of any one or more effects to acquire the detection result. Optionally, if an effect matching the input information is present, the effect may be determined as the target effect to acquire the detection result. Alternatively, if a plurality of effects matching the input information are present, an effect with the highest association degree with the input information among the plurality of effects may be determined as the target effect to acquire the detection result. As an implementable manner, the effect with the highest similarity may be determined as the target effect by calculating the similarity between the input information and the identification information of the effect. Alternatively, if it is detected that no effect matching the input information is present, it may be determined that the detection result is that no target effect is present.

After acquiring the detection result, the media content acquisition control matching the detection result may be displayed based on the detection result. The media content acquisition control in the session interface is displayed in different display styles based on the detection result. Further, the display effect in the session interface is optimized.

Optionally, based on any of the foregoing embodiments, Step 302 includes: performing word segmentation on the input information to acquire a word segmentation result; determining, based on the word segmentation result, a target keyword corresponding to the input information; and detecting whether a target effect matching the target keyword is present, to acquire the detection result.

In this embodiment, the detection on the target effect may be performed based on a keyword in the input information.

Optionally, the word segmentation may be performed on the input information to acquire the word segmentation result. At least one target keyword corresponding to the input information may be determined based on the word segmentation result. The word segmentation result may include at least one word segment, and a word segment meeting a predetermined filtering condition may be selected from the at least one word segment and determined as the target keyword corresponding to the input information. For example, if a plurality of word segments meeting the predetermined filtering condition are present in the word segmentation result, a target effect corresponding to each word segment may be provided, and a display content matching the at least one target effect is displayed on the media content acquisition control. This is not limited in the present disclosure.

Further, whether the target effect matching the target keyword is present may be detected to acquire the detection result. As an example, based on the target keyword, it is possible to detect the existence of any one or more effects whose identification information includes the target keyword. Alternatively, it is possible to detect the existence of any one or more effects whose identification information is highly similar to the target keyword. Further, the target effect may be selected from any one or more effects.

If a plurality of effects currently matching the target keyword are present, an effect with the most historical usage times may be selected from the plurality of effects as the target effect. Alternatively, a latest released effect may be selected from the plurality of effects as the target effect. Alternatively, an effect with the highest similarity to the target keyword may be selected from the plurality of effects as the target effect, which is not limited in the present disclosure.

The method of interface display provided by the embodiment, by detecting whether the target effect matching the input information is present and determining the display style of the media content acquisition control based on the detection result, enables the user to quickly generate the target media content associated with the input information. In addition, the display style in the session interface can be enriched, and the display effect of the session interface is optimized.

Optionally, based on any of the foregoing embodiments, Step 303 includes: if it is determined that a target effect matching the input content is present, displaying a display content matching the target effect on the media content acquisition control; and/or if it is determined that no target effect matching the target keyword is present, displaying predetermined text information on the media content acquisition control.

In this embodiment, after acquiring the detection result, different styles of media content acquisition controls may be displayed based on different detection results.

Optionally, if the detection result is that a target effect matching the input content is present, a display content matching the target effect may be displayed on the media content acquisition control. The display content matching the target effect may be an identification of the target effect or image information associated with the target effect. On the contrary, if the detection result is that no target effect matching the target keyword is present, predetermined text information is displayed on the media content acquisition control. The predetermined text information may be a text, and correspondingly, "text" may be displayed on the media content acquisition control.

The method of interface display provided by this embodiment, by displaying different styles of media content acquisition controls based on different detection results, enables the display content in the session interface to be more diversified, and the interaction efficiency is improved.

Further, on the basis of any of the above embodiments, after Step 102, the method further includes: playing, in the media content acquisition interface, an audio corresponding to the input information, to enable the target media content to include the audio corresponding to the input information.

In this embodiment, after the input information is displayed in the media content acquisition interface, the audio corresponding to the input information may further be played in the media content acquisition interface. Therefore, after the target media content is generated in the media content acquisition interface, the target media content may include the audio corresponding to the input information.

Optionally, the audio corresponding to the input information may be played in a predetermined audio parameter in the media content acquisition interface. The predetermined audio parameter includes one or more of: a predetermined timbre parameter, a predetermined play speed parameter, or a predetermined tone parameter.

The method of interface display provided by this embodiment, by playing the audio corresponding to the input information in the media content acquisition interface, enables the target media content to include the audio corresponding to the input information, so that the first user can more intuitively know the input content displayed in the media content acquisition interface, and the generation efficiency of the target media content is improved. In addition, the content quality of the target media content can be improved.

Further, on the basis of any of the above embodiments, after playing in the media content acquisition interface the audio corresponding to the input information corresponding to the input information, the method further includes: adjusting an audio parameter of the audio corresponding to the input information in response to a triggering performed by the first user on a predetermined adjustment control. The audio parameter includes one or more of: a timbre parameter, a play speed parameter, or a tone parameter.

Further, the first user may also edit and adjust the audio in the media content acquisition interface, for example, adjust the start time of the audio, or adjust the input information corresponding to the audio.

In this embodiment, after the audio corresponding to the input information is played in the media content acquisition interface, in order to make the generated target media content better consistent with the personalized requirement of the first user, the first user may further perform an adjustment on the audio corresponding to the input information.

Optionally, an adjustment control may be preset in the media content acquisition interface. The first user may triggering the adjustment control according to actual requirements. In response to the trigger, the audio parameter of the audio corresponding to the input information may be adjusted. The audio parameter includes one or more of: a timbre parameter, a play speed parameter, or a tone parameter.

As an implementable manner, in response to the first user triggering the adjustment control, a predetermined adjustment list may be displayed. The adjustment list includes a plurality of audio parameter adjustment controls. In response to an adjustment performed by the first user on an audio parameter adjustment control, the adjustment is performed on the audio parameter, to enable the audio included in the target media content to be more consistent with the personalized requirement of the first user, and improve the interaction efficiency.

Further, on the basis of any of the above embodiments, after playing in the media content acquisition interface the audio corresponding to the input information corresponding to the input information, the method further includes: stopping playing the audio corresponding to the input information in response to a triggering performed by the first user on a predetermined closing control.

In this embodiment, after the audio corresponding to the input information is played in the media content acquisition interface, the first user may further perform the closing on the audio according to actual requirements.

Optionally, a closing control may be preset in the media content acquisition interface. In response to the triggering performed by the first user on the closed control, the audio corresponding to the input information may be stopped playing in the media content acquisition interface.

Correspondingly, after the audio corresponding to the input information is closed, the target media content generated in the media content acquisition interface does not include the audio corresponding to the input information.

The method of interface display provided by the embodiment, in response to the triggering performed by the first user on the adjustment control and the closing control, the audio corresponding to the input information is adjusted and closed according to actual requirements of the first user, so that the audio corresponding to the input information in the target media content can be more consistent with the personalized requirement of the first user, and the interaction efficiency is improved.

Optionally, on the basis of any of the foregoing embodiments, the media content acquisition control matching the input information includes a first media content acquisition control. Step 102 includes: in response to a first triggering performed by the first user on the first media content acquisition control, determining a target effect matching the input content; and displaying the target effect in the media content acquisition interface, to enable the first user to perform generation of the target media content based on the target effect.

In this embodiment, the media content acquisition control matching the input information includes the first media content acquisition control. The first media content acquisition control may be displayed in response to a detection that a target effect matching the input information is present. The first media content acquisition control may be displayed with the display content matching the target effect.

After the first media content acquisition control is displayed, in response to the triggering performed by the first user on the first media content acquisition control, the first media content acquisition interface may be jumped to, and the target effect is displayed in the media content acquisition interface. Therefore, the first user may generate the target media content based on the target effect in the media content acquisition interface.

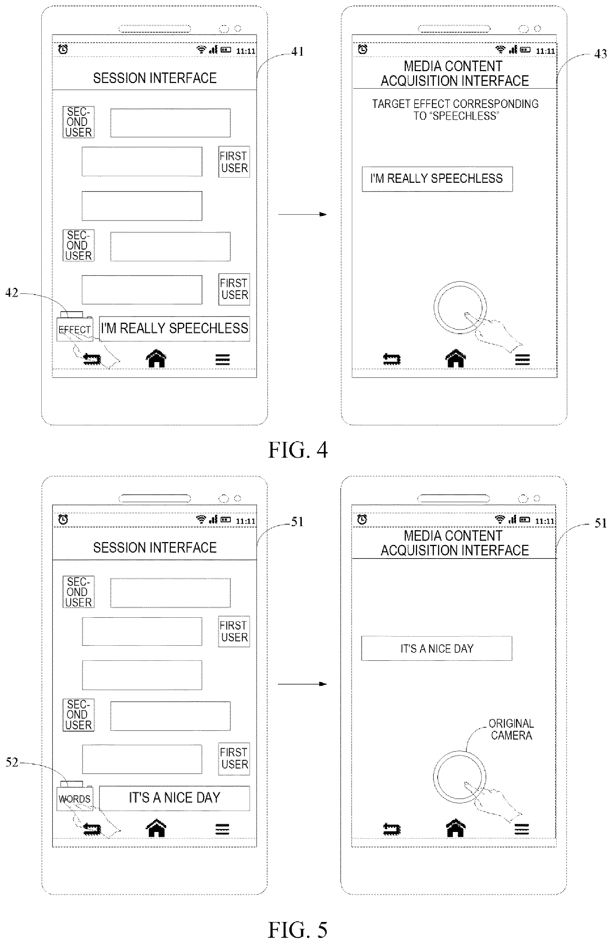

FIG. 4 is a schematic diagram of a display interface provided by the embodiments of the present disclosure. As shown in FIG. 4, a session interface 41 may be displayed with a first media content acquisition control 42. The first media content acquisition control 42 may be a control associated with a target effect. For example, after the first user inputs "I'm really speechless" input information, a keyword "speechless" may be determined based on the input information, then a target effect corresponding to "speechless" may be matched, and the first media content acquisition control 42 matching the target effect may be displayed in the session interface 41. In actual application, the first media content acquisition control 42 may be displayed with an image content corresponding to the target effect. Therefore, after the first user triggers the first media content acquisition control 42, a media content acquisition interface 43 may be jumped to, and the target media content generation is performed based on the target effect in the media content acquisition interface 43. Correspondingly, the media content acquisition interface 43 may further be displayed with the input information of "I'm really speechless".

The method of interface display provided by the embodiment, by displaying the first media content acquisition control in the session interface, enables the first user to quickly generate the target media content associated with the target effect based on the first media content acquisition control, the process of generating the media content based on the target effect is simplified, the media content generation efficiency is improved, and the interaction efficiency can be improved.

Optionally, on the basis of any of the foregoing embodiments, the media content acquisition control matching the input information includes a second media content acquisition control, and Step 102 includes: in response to a first triggering performed by the first user on the second media content acquisition control, displaying the media content acquisition interface, to enable the first user to perform generation of the target media content based on a predetermined original camera in the media content acquisition interface.

In this embodiment, the media content acquisition control matching the input information includes the second media content acquisition control. The second media content acquisition control may be displayed if it is detected that no target effect matching the input information is present. The second media content acquisition control may be displayed with predetermined text information.

In response to the triggering performed by the first user on the second media content acquisition control, the media content acquisition interface may be jumped to, and the input information is displayed in the media content acquisition interface.

Since no target effect matching the input information is present currently, after jumping to the media content acquisition interface, in response to the media content acquisition triggered by the first user on the media content acquisition interface, the target media content generation may be performed based on a predetermined original camera.

FIG. 5 is a schematic diagram of a display interface provided by the embodiments of the present disclosure. As shown in FIG. 5, a second media content acquisition control 52 may be displayed in a session interface 51. If the input information "It's a nice today" does not match a corresponding target effect, the second media content acquisition control 52 may be displayed with predetermined text information. Optionally, in response to a triggering performed by the first user on the second media content acquisition control 52, the media content acquisition interface 53 may be jumped to, and the target media content generation may be performed based on the original camera in the media content acquisition interface 53. The input information "It's a nice day" may be displayed in the media content acquisition interface 53.

The method of interface display provided in this embodiment, by displaying the second media content acquisition control in the session interface, enables the first user to quickly generate the target media content by using the original camera based on the second media content acquisition control. On the basis of enriching the display content in the session interface, the generation efficiency of the target media content is improved.

Further, on the basis of any of the above embodiments, after Step 102, the method further includes: if a target effect matching the input information is present, displaying, within a predetermined display area of the media content acquisition interface, identification information corresponding to the target effect.

In this embodiment, if it is detected that the target effect matching the input information is present, in response to the triggering performed by the first user on the media content acquisition control, the media content acquisition interface may be jumped to. To facilitate the adjustment performed by the first user on the target effect, or the switching performed by the first user on the target effect, the identification information corresponding to the target effect may be displayed within a predetermined display area of the media content acquisition interface.

Optionally, the identification information corresponding to the target effect may be displayed within a display area at a lower left corner of the media content acquisition interface.

The method of interface display provided by the embodiment, by displaying the identification information corresponding to the target effect within the predetermined display area of the media content acquisition interface, enables the first user to know and adjust the currently used target effect more intuitively. The target media content generation process is simplified, and the first user can more quickly implement the generation on the target media content.

Further, on the basis of any of the above embodiments, after displaying the identification information corresponding to the target effect within the predetermined display area of the media content acquisition interface, the method further includes: in response to a triggering performed by the first user on the identification information corresponding to the target effect, displaying an effect list in the media content acquisition interface. The effect list includes at least one effect associated with the input information and a plurality of effects meeting a predetermined presentation condition.

In this embodiment, after the identification information corresponding to the target effect is displayed within the predetermined display area of the media content acquisition interface, the effect list may be displayed in the media content acquisition interface in response to the triggering performed by the first user on the identification information of the target effect. The effect list includes at least one effect associated with the input information and a plurality of effects meeting a predetermined presentation condition. The first user can view and select more effects based on the effect list.

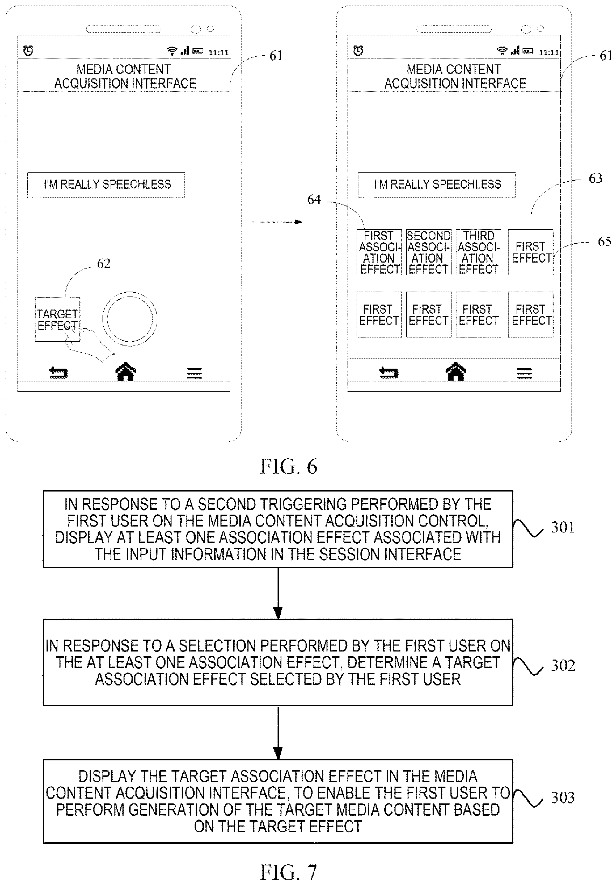

FIG. 6 is a schematic diagram of interface interaction provided by the embodiments of the present disclosure. As shown in FIG. 6, a media content acquisition interface 61 may be displayed with identification information 62 corresponding to a target effect. In response to a triggering performed by the first user on the identification information 62 corresponding to the target effect, an effect list 63 may be displayed in the media content acquisition interface 61. The effect list 63 is displayed with at least one effect 64 associated with the input information and a plurality of first effects 65 meeting the predetermined presentation condition. For example, the input information may be "I'm really speechless", and effects 64 associated with the input information may include a first association effect, a second association effect, a third association effect, and the like that are associated with "speechless".

Optionally, on the basis of any of the foregoing embodiments, displaying the effect list in the media content acquisition interface includes: displaying a predetermined number of effects associated with the input information within a first display area predetermined in the effect list, and displaying the plurality of effects meeting the predetermined presentation condition within a second display area predetermined in the effect list.

In this embodiment, after the effect list is displayed in the media content acquisition interface, to facilitate the adjustment or the switching performed by the first user on the target effect, the predetermined number of effects associated with the input information may be displayed within the predetermined first display area in the effect list, and the plurality of effects meeting the predetermined presentation condition are displayed within the second display area predetermined in the effect list. The effect associated with the input information may include an effect with identification information associated with the input information. For example, the effect meeting the predetermined presentation condition may include a current hot effect, an effect historically used by the first user, an effect from the first user's favorites, and the like.

Therefore, the first user can select the effect more consistent with the personalized requirement from the effect list for subsequent target media content generation.

As an optional implementation, a predetermined parameter adjustment control may be further displayed in the effect list. In response to a triggering performed by the first user on the parameter adjustment control, the parameter corresponding to the target effect may be adjusted, so that the display effect of the media content generated based on the target effect is more consistent with the personalized requirement of the first user.

The method of interface display provided by the embodiment, in response to the triggering performed by the first user on the identification information corresponding to the target effect, by displaying the effect list in the media content acquisition interface and displaying at least one effect associated with the input information and the plurality of effects meeting the predetermined presentation condition in the effect list, enables the first user to quickly select and switch the effect based on the effect list, and the interaction efficiency in the target media content generation process is further improved.

FIG. 7 is a schematic flowchart of a method of interface display according to still another embodiment of the present disclosure. On the basis of any of the foregoing embodiments, after Step 101, the method further includes the following steps.

At step 701, in response to a second triggering performed by the first user on the media content acquisition control, display at least one association effect associated with the input information in the session interface.

At Step 702: in response to a selection performed by the first user on the at least one association effect, determine a target association effect selected by the first user.

At Step 703: display the target association effect in the media content acquisition interface, to enable the first user to perform generation of the target media content based on the target effect.

In this embodiment, the first user may perform the second triggering on the media content acquisition control. The second triggering includes, but is not limited to, a click, a double-click, a long press, a drag, or any other triggering different from the first trigger.

In response to the second triggering performed by the first user on the media content acquisition control, at least one association effect associated with the input information may be displayed in the session interface. The association degree between the association effect and the input information is less than an association degree between the target effect and the input information. Optionally, an association degree between an effect and the input information may be characterized by a similarity between the identification information of the effect and the input information.

The first user may perform a selection on the at least one association effect according to actual requirements. In response to the selection, a target association effect currently selected by the first user may be determined. Jumping to the media content acquisition interface and displaying the target association effect in the media content acquisition interface enable the first user to generate the target media content based on the target association effect.

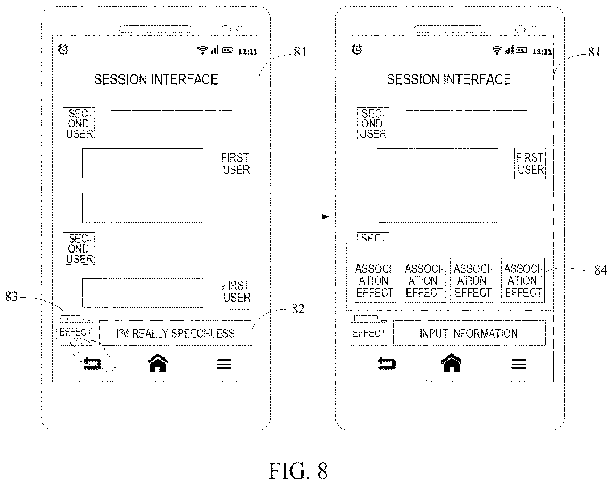

FIG. 8 is a schematic diagram of another interface interaction provided by the embodiments of the present disclosure. As shown in FIG. 8, a media content acquisition control 83 matching input information 82 is displayed in a session interface 81. In response to a second triggering performed by the first user on the media content acquisition control 83, at least one association effect 84 associated with the input information 82 may be displayed in the session interface 81. As an example, the input information may be "I'm really speechless", and the association effect 84 associated with the input information may include a plurality of association effects that match "speechless".

According to the method of interface display provided in this embodiment, at least one association effect associated with the input information is displayed in the session interface in response to the second triggering performed by the first user on the media content acquisition control, so that the display content in the session interface can be further enriched. In addition, by displaying the at least one association effect, the first user can perform the selection on the effects in the session interface, so that the first user can generate the target media content that is associated with the current input information and more consistent with the personalized requirement of the first user.

Optionally, on the basis of any of the foregoing embodiments, Step 101 includes: in response to input information generated by the first user on an input control predetermined in the session interface, displaying in the session interface the media content acquisition control matching the input information, and displaying, at a display position associated with the input control, at least one association effect associated with the input information.

In this embodiment, the first user may generate the input information in the session interface by using a predetermined input control. In response to the input information generated by the first user, whether a target effect matching the input information is present may be detected. If yes, a media content acquisition control matching the target effect is displayed in the session interface. If not, a media content acquisition control matching predetermined text information may be displayed.

Optionally, if it is detected that an effect associated with the input information is present, at least one association effect associated with the input information may be determined in real time. The association degree between the association effect and the input information is less than the association degree between the target effect and the input information. Optionally, an association degree between an effect and the input information may be characterized by a similarity between the identification information of the effect and the input information

Further, at least one association effect associated with the input information may be displayed at a display position associated with the input control. Therefore, in the input process, the first user can view the association effect associated with the current input information in real time. In addition, the first user may further perform a triggering on the association effect according to actual requirements. In response to the trigger, the media content acquisition interface may be jumped to, so that the first user performs the generation on the target media content based on the triggered association effect in the media content acquisition interface.

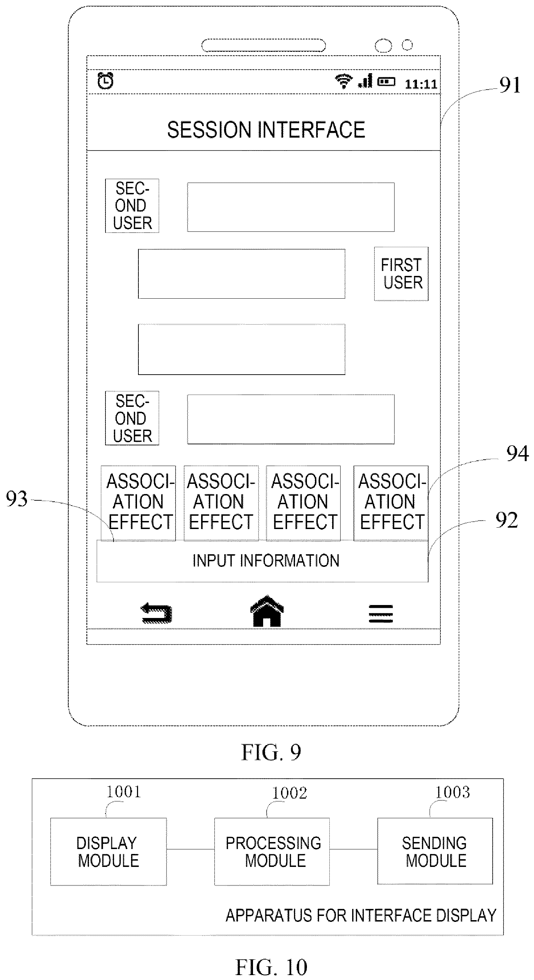

FIG. 9 is a schematic diagram of another interface interaction provided by the embodiments of the present disclosure. As shown in FIG. 9, input information 92 generated by the first user in a session interface 91 is acquired, and a media content acquisition control 93 matching the input information 92 is displayed in the session interface 91. In addition, at least one association effect 94 associated with the input information 92 may be displayed at a display position associated with an input control.

According to the method of interface display provided by this embodiment, the media content acquisition control matched with the input information is displayed in the session interface, and at least one association effect associated with the input information is displayed at the display position associated with the input control, so that the display content in the session interface can be further enriched. In addition, by displaying the at least one association effect, the first user can implement the selection of the effect and the switching of the display style of the media content acquisition control in the session interface, so that the first user can generate the target media content associated with the current input information and more consistent with the personalized requirement of the first user.

FIG. 10 is a schematic structural diagram of an apparatus for interface display provided by the embodiments of the present disclosure. As shown in FIG. 10, the apparatus includes a display module 1001, a processing module 1002, and a sending module 1003. The display module 1001 is configured to, in response to input information generated in a session interface associated with a first user and at least one second user, display in the session interface a media content acquisition control matching the input information. The processing module 1002 is configured to, in response to a first triggering on the media content acquisition control, display a media content acquisition interface, and display the input information in the media content acquisition interface. The sending module 1003 is configured to acquire a target media content generated by the first user in the media content acquisition interface, and send the target media content into the session interface.

Further, on the basis of any of the foregoing embodiments, the display module is configured to acquire the input information generated by the first user in the session interface, detect whether a target effect matching the input information is present, to acquire a detection result, and display, in the session interface, the media content acquisition control matching the detection result.

Further, on the basis of any of the foregoing embodiments, the display module is configured to perform word segmentation on the input information to acquire a word segmentation result, determine, based on the word segmentation result, a target keyword corresponding to the input information, and detect whether a target effect matching the target keyword is present, to acquire the detection result.

Further, on the basis of any of the foregoing embodiments, the display module is configured to: if it is determined that a target effect matching the input content is present, display a display content matching the target effect on the media content acquisition control; and/or if it is determined that no target effect matching the target keyword is present, display predetermined text information on the media content acquisition control.

Further, on the basis of any of the foregoing embodiments, the apparatus further includes: a playing module, configured to play, in the media content acquisition interface, an audio corresponding to the input information, to enable the target media content to include the audio corresponding to the input information.

Further, on the basis of any of the foregoing embodiments, the apparatus further includes: an adjustment module, configured to, in response to a triggering performed by the first user on a predetermined adjustment control, adjust an audio parameter of the audio corresponding to the input information. The audio parameter includes one or more of: a timbre parameter, a play speed parameter, or a pitch parameter.

Further, on the basis of any of the foregoing embodiments, the apparatus further includes: a closing module, configured to, in response to a triggering performed by the first user on a predetermined closing control, stop playing the audio corresponding to the input information.

Further, on the basis of any of the foregoing embodiments, the media content acquisition control matching the input information includes a first media content acquisition control. The processing module is configured to, in response to a first triggering performed by the first user on the first media content acquisition control, determine a target effect matching the input content; and display the target effect in the media content acquisition interface, to enable the first user to perform generation of the target media content based on the target effect.

Further, on the basis of any of the foregoing embodiments, the media content acquisition control matching the input information includes a second media content acquisition control. The processing module is configured to, in response to a first triggering performed by the first user on the second media content acquisition control, display the media content acquisition interface, to enable the first user to perform generation of the target media content based on a predetermined original camera in the media content acquisition interface.

Further, on the basis of any one of the foregoing embodiments, the apparatus further includes: the display module is configured to, if it is determined that a target effect matching the input information is present, display, within a predetermined display area of the media content acquisition interface, identification information corresponding to the target effect.

Further, on the basis of any of the foregoing embodiments, the apparatus further includes: the display module is configured to, in response to a triggering performed by the first user on the identification information corresponding to the target effect, display an effect list in the media content acquisition interface. The effect list includes at least one effect associated with the input information and a plurality of effects meeting a predetermined presentation condition.

Further, on the basis of any of the foregoing embodiments, the display module is configured to display a predetermined number of effects associated with the input information within a first display area predetermined in the effect list, and display the plurality of effects meeting the predetermined presentation condition within a second display area predetermined in the effect list.

Further, on the basis of any of the foregoing embodiments, the apparatus further includes: the display module is configured to, in response to a second triggering performed by the first user on the media content acquisition control, displaying at least one association effect associated with the input information in the session interface. A selecting module, configured to, in response to a selection performed by the first user on the at least one association effect, determine a target association effect selected by the first user. The processing module is configured to display the target association effect in the media content acquisition interface, to enable the first user to perform generation of the target media content based on the target effect.

Further, on the basis of any of the foregoing embodiments, the display module is configured to: in response to input information generated by the first user on an input control predetermined in the session interface, display in the session interface the media content acquisition control matching the input information, and display, at a display position associated with the input control, at least one association effect associated with the input information.

The apparatus provided in this embodiment may be configured to perform the technical solutions in the foregoing method embodiments, and implementation principles and technical effects thereof are similar, and details are not described herein again in this embodiment.

In order to implement the foregoing embodiments, the embodiments of the present disclosure further provide an electronic device, including: a processor and a memory. The memory stores computer executable instructions. The processor executes the computer executable instructions stored in the memory, to enable the processor to perform the method of interface display according to any of the foregoing embodiments.

The device provided in this embodiment may be configured to perform the technical solutions in the foregoing method embodiments, and implementation principles and technical effects thereof are similar, and details are not described herein again in this embodiment.

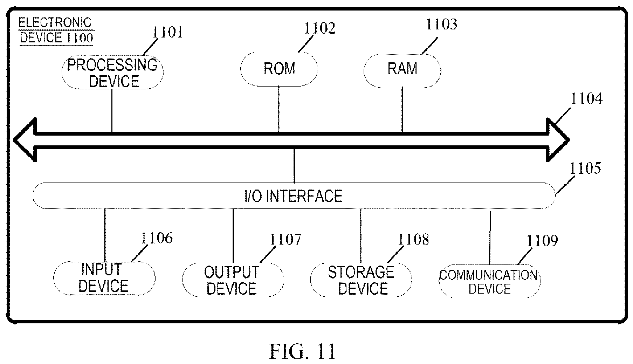

FIG. 11 is a schematic structural diagram of an electronic device provided by the embodiments of the present disclosure. The terminal device may include but are not limited to mobile terminals such as mobile phones, laptops, digital broadcast receivers, personal digital assistants (PDA), portable Android devices (PAD), portable media players (PMP), car-mounted terminals (such as vehicle navigation terminals), and fixed terminals such as digital TV, desktop computers, etc. The electronic device shown in FIG. 11 is only an example and should not bring any limitation on the function and scope of use of the embodiments of the present disclosure.

As shown in FIG. 11, the electronic device 1100 may include a processing device (such as a central processing unit, graphics processing unit, etc.) 1101. The electronic device 1100 may perform various actions and processes based on programs stored in a read only memory (ROM) 1102 or loaded from storage device 1108 into a random access memory (RAM) 1103. In the RAM 1103, various programs and data necessary for the operation of the electronic device 1100 are also stored. The processing device 1101, ROM 1102, and RAM 1103 are connected to each other through a bus 1104. An input/output (I/O) interface 1105 is also connected to the bus 1104.

Generally, the following devices can be connected to the I/O interface 1105: an input device 1106 including, for example, touch screens, touchpads, keyboards, mice, cameras, microphones, accelerometers, gyroscopes, etc.; an output device 1107 including liquid crystal displays (LCDs), speakers, vibrators, etc.; a storage device 1108 including magnetic tapes, hard disks, etc.; and a communication device 1109. The communication device 1109 may allow the electronic device 1100 to communicate with other devices wirelessly or wired to exchange data. Although FIG. 11 illustrates the electronic device 1100 with various devices, it should be understood that it is not required to implement or have all the devices shown. It can be implemented or equipped with more or fewer devices as an alternative.

In particular, according to the embodiments of the present disclosure, the process described above with reference to the flowchart can be implemented as a computer software program. For example, an embodiment of the present disclosure includes a computer program product, and the computer program product includes a computer program carried on a computer-readable medium, where the computer program includes program code for performing a method for recommending words. In such an embodiment, the computer program can be downloaded and installed from a network through the communication device 1109, or installed through the storage device 1108, or installed through the ROM 1102. When the computer program is executed by the processing device 1101, the above functions defined in the method of the embodiment of the present disclosure are performed.

It should be noted that the computer-readable medium described above can be a computer-readable signal medium or a computer-readable storage medium, or any combination thereof. The computer-readable storage medium can be, for example, but not limited to, an electrical, magnetic, optical, electromagnetic, infrared, or semiconductor system, apparatus, or device, or any combination thereof. The computer-readable storage media may include but are not limited to: an electrical connection with one or more wires, a portable computer disk, a hard disk, random access memory (RAM), read-only memory (ROM), an erasable programmable read only memory (EPROM or flash memory), an optical fiber, a portable compact disk read only memory (CD-ROM), an optical storage device, a magnetic storage device, or any combination thereof. In the present disclosure, a computer-readable storage medium may be any tangible medium containing or storing a program that can be used by an instruction execution system, apparatus, or device, or can be used in combination with an instruction execution system, apparatus, or device. In the present disclosure, a computer-readable signal medium can include a data signal propagated in baseband or as a carrier wave, the computer-readable signal medium carries computer-readable program code therein. Such propagated data signals may take many forms, including but not limited to electromagnetic signals, optical signals, or any combination thereof. A computer-readable signal medium may also be any computer-readable medium other than a computer-readable storage medium, which can send, propagate, or transmit programs for use by or in conjunction with instruction execution systems, apparatus, or devices. The program code contained on the computer-readable medium may be transmitted using any suitable medium, the medium includes but not limited to: wires, optical cables, RF (radio frequency), etc., or any combination thereof.

The embodiments of the present disclosure further provide a computer readable storage medium. The computer readable storage medium stores computer executable instructions that, when executed by a processor, implement the method of interface display according to any of the foregoing embodiments.

The embodiments of the present disclosure further provide a computer program product, including a computer program which, when executed by a processor, implements the method of interface display according to any of the foregoing embodiments.

The computer readable medium may be included in the electronic device or may exist separately without being assembled into the electronic device.

The computer readable medium carries one or more programs. When the one or more programs are executed by an electronic device, the electronic device executes the method shown in the above embodiments.

Computer program codes for performing the operations of the present disclosure may be written in one or more programming languages or a combination thereof, including but not limited to Object Oriented programming languages - such as Java, Smalltalk, C++, and also conventional procedural programming languages - such as "C" or similar programming languages. The program code may be executed entirely on the user's computer, partially executed on the user's computer, executed as a standalone software package, partially executed on the user's computer and partially on a remote computer, or entirely on a remote computer or server. In the case of involving a remote computer, the remote computer may be any kind of network - including LAN or WAN - connected to the user's computer, or may be connected to an external computer (e.g., through an Internet service provider to connect via the Internet).

The flowcharts and block diagrams in the accompanying drawings illustrate the architecture, functions, and operations of possible implementations of the system, method, and computer program product of various embodiments of the present disclosure. Each block in a flowchart or block diagram may represent a module, program segment, or portion of code that contains one or more executable instructions for implementing a specified logical function. It should also be noted that in some alternative implementations, the functions marked in the blocks may occur in a different order than those marked in the drawings. For example, two consecutive blocks may actually be executed in parallel, or they may sometimes be executed in reverse order, depending on the function involved. It should also be noted that each block in the block diagrams and/or flowcharts, as well as combinations of blocks in the block diagrams and/or flowcharts, may be implemented using a dedicated hardware-based system that performs the specified function or operations, or may be implemented using a combination of dedicated hardware and computer instructions.

The unit described in the embodiments of the present disclosure may be implemented by means of software or hardware. In some cases, the name of the module does not constitute a limitation on the module itself. For example, a first acquisition module may further be described as "a unit for acquiring at least two Internet Protocol addresses".

The functions described herein above can be performed at least in part by one or more hardware logic components. For example, without limitation, example types of hardware logic components that may be used include: a field programmable gate array (FPGA), an application specific integrated circuits (ASIC), an application specific standard part (ASSP), a system on chip (SOC), a complex programmable logic device (CPLD), and so on.

In the context of present disclosure, a machine-readable medium can be a tangible medium that may contain or store programs for use by or in conjunction with instruction execution systems, apparatuses, or devices. A machine-readable medium may be a machine-readable signal medium or a machine-readable storage medium. A machine-readable medium may include, but are not limited to, electronic, magnetic, optical, electromagnetic, infrared, or semiconductor systems, apparatuses, or devices, or any suitable combination thereof. Specific examples of the machine-readable storage medium may include electrical connections based on one or more wires, portable computer disks, hard disks, RAM, ROM, EPROM or flash memory, optical fibers, CD-ROM, optical storage devices, magnetic storage devices, or any combination thereof.

In a first aspect, a method of interface display is provided according to one or more embodiments of the present disclosure, including: in response to input information generated in a session interface associated with a first user and at least one second user, displaying, in the session interface, a media content acquisition control matching the input information; in response to a first triggering performed by the first user on the media content acquisition control, displaying a media content acquisition interface, and displaying the input information in the media content acquisition interface; acquiring a target media content generated by the first user in the media content acquisition interface, and sending the target media content into the session interface.

According to one or more embodiments of the present disclosure, displaying in the session interface the media content acquisition control matching the input information in response to the input information generated in the session interface associated with the first user and the at least one second user includes: acquiring the input information generated in the session interface; detecting whether a target effect matching the input information is present, to acquire a detection result; and displaying, in the session interface, the media content acquisition control matching the detection result.

According to one or more embodiments of the present disclosure, detecting whether the target effect matching the input information is present to acquire the detection result includes: performing word segmentation on the input information to acquire a word segmentation result; determining, based on the word segmentation result, a target keyword corresponding to the input information; and detecting whether a target effect matching the target keyword is present, to acquire the detection result.

According to one or more embodiments of the present disclosure, displaying in the session interface the media content acquisition control matching the detection result includes: if it is determined that a target effect matching the input content is present, displaying a display content matching the target effect on the media content acquisition control; and/or if it is determined that no target effect matching the target keyword is present, displaying predetermined text information on the media content acquisition control.

According to one or more embodiments of the present disclosure, after displaying the input information in the media content acquisition interface, the method further includes: playing, in the media content acquisition interface, an audio corresponding to the input information, to enable the target media content to include the audio corresponding to the input information.

According to one or more embodiments of the present disclosure, after playing the audio corresponding to the input information corresponding to the input information in the media content acquisition interface, the method further includes: in response to a triggering on a predetermined adjustment control, adjusting an audio parameter of the audio corresponding to the input information. The audio parameter includes one or more of: a timbre parameter, a play speed parameter, or a tone parameter.

According to one or more embodiments of the present disclosure, after playing in the media content acquisition interface the audio corresponding to the input information corresponding to the input information, the method further includes: in response to a triggering on a predetermined closing control, stopping playing the audio corresponding to the input information.

According to one or more embodiments of the present disclosure, the media content acquisition control matching the input information includes a first media content acquisition control, and displaying the media content acquisition interface in response to the first triggering on the media content acquisition control includes: in response to a first triggering on the first media content acquisition control, determining a target effect matching the input content; and displaying the target effect in the media content acquisition interface, to enable the first user to perform generation of the target media content based on the target effect.

According to one or more embodiments of the present disclosure, the media content acquisition control matching the input information includes a second media content acquisition control, and displaying the media content acquisition interface in response to the first triggering on the media content acquisition control includes: in response to a first triggering on the second media content acquisition control, displaying the media content acquisition interface, to enable the first user to perform generation of the target media content based on a predetermined original camera in the media content acquisition interface.

According to one or more embodiments of the present disclosure, after displaying the media content acquisition interface in response to the first triggering on the media content acquisition control, the method further includes: if it is determined that a target effect matching the input information is present, displaying, in a predetermined display area of the media content acquisition interface, identification information corresponding to the target effect.

According to one or more embodiments of the present disclosure, displaying the identification information corresponding to the target effect in the predetermined display area of the media content acquisition interface, the method further includes: in response to a triggering on the identification information corresponding to the target effect, displaying an effect list in the media content acquisition interface. The effect list includes at least one effect associated with the input information and a plurality of effects meeting a predetermined presentation condition.

According to one or more embodiments of the present disclosure, displaying the effect list in the media content acquisition interface includes: displaying a predetermined number of effects associated with the input information within a first display area predetermined in the effect list, and displaying the plurality of effects meeting the predetermined presentation condition within a second display area predetermined in the effect list.

According to one or more embodiments of the present disclosure, after displaying the media content acquisition control matching the input information in the session interface in response to the input information generated in the session interface associated with the first user and the at least one second user, the method further includes: in response to a second triggering on the media content acquisition control, displaying at least one association effect associated with the input information in the session interface; in response to a selection on the at least one association effect, determining a selected target association effect; and displaying the target association effect in the media content acquisition interface, to enable the first user to perform generation of the target media content based on the target effect.

According to one or more embodiments of the present disclosure, displaying the media content acquisition control matching the input information in the session interface in response to the input information generated in the session interface associated with the first user and the at least one second user includes: in response to input information generated on an input control predetermined in the session interface, displaying in the session interface the media content acquisition control matching the input information, and displaying, at a display position associated with the input control, at least one association effect associated with the input information.

In a second aspect, an apparatus for interface display is provided according to one or more embodiments of the present disclosure, including: a display module, configured to, in response to input information generated in a session interface associated with a first user and at least one second user, display in the session interface a media content acquisition control matching the input information; a processing module, configured to, in response to a first triggering on the media content acquisition control, display a media content acquisition interface, and display the input information in the media content acquisition interface; and a sending module, configured to acquire a target media content generated in the media content acquisition interface, and send the target media content into the session interface.

According to one or more embodiments of the present disclosure, the display module is configured to acquire the input information generated by the first user in the session interface, detect whether a target effect matching the input information is present, to acquire a detection result, and display, in the session interface, the media content acquisition control matching the detection result.

According to one or more embodiments of the present disclosure, the display module is configured to perform word segmentation on the input information to acquire a word segmentation result, determine, based on the word segmentation result, a target keyword corresponding to the input information, and detect whether a target effect matching the target keyword is present, to acquire the detection result.

According to one or more embodiments of the present disclosure, the display module is configured to: if it is determined that a target effect matching the input content is present, display a display content matching the target effect on the media content acquisition control; and/or if it is determined that no target effect matching the target keyword is present, display predetermined text information on the media content acquisition control.

According to one or more embodiments of the present disclosure, the apparatus further includes: a playing module, configured to play, in the media content acquisition interface, an audio corresponding to the input information, to enable the target media content to include the audio corresponding to the input information.

According to one or more embodiments of the present disclosure, the apparatus further includes: an adjustment module, configured to, in response to a triggering performed by the first user on a predetermined adjustment control, adjust an audio parameter of the audio corresponding to the input information. The audio parameter includes one or more of: a timbre parameter, a play speed parameter, or a pitch parameter.

According to one or more embodiments of the present disclosure, the apparatus further includes: a closing module, configured to, in response to a triggering performed by the first user on a predetermined closing control, stop playing the audio corresponding to the input information.

According to one or more embodiments of the present disclosure, the media content acquisition control matching the input information includes a first media content acquisition control. The processing module is configured to, in response to a first triggering performed by the first user on the first media content acquisition control, determine a target effect matching the input content; and display the target effect in the media content acquisition interface, to enable the first user to perform generation of the target media content based on the target effect.

According to one or more embodiments of the present disclosure, the media content acquisition control matching the input information includes a second media content acquisition control. The processing module is configured to, in response to a first triggering performed by the first user on the second media content acquisition control, display the media content acquisition interface, to enable the first user to perform generation of the target media content based on a predetermined original camera in the media content acquisition interface.

According to one or more embodiments of the present disclosure, the apparatus further includes: the display module is configured to, if it is determined that a target effect matching the input information is present, display, in a predetermined display area of the media content acquisition interface, identification information corresponding to the target effect.

According to one or more embodiments of the present disclosure, the apparatus further includes: the display module is configured to, in response to a triggering performed by the first user on the identification information corresponding to the target effect, display an effect list in the media content acquisition interface. The effect list includes at least one effect associated with the input information and a plurality of effects meeting a predetermined presentation condition.

According to one or more embodiments of the present disclosure, the display module is configured to display a predetermined number of effects associated with the input information within a first display area predetermined in the effect list, and display the plurality of effects meeting the predetermined presentation condition within a second display area predetermined in the effect list.

According to one or more embodiments of the present disclosure, the apparatus further includes: the display module is configured to, in response to a second triggering performed by the first user on the media content acquisition control, displaying at least one association effect associated with the input information in the session interface. A selecting module, configured to, in response to a selection performed by the first user on the at least one association effect, determine a target association effect selected by the first user. The processing module is configured to display the target association effect in the media content acquisition interface, to enable the first user to perform generation of the target media content based on the target effect.

According to one or more embodiments of the present disclosure, the display module is configured to: in response to input information generated by the first user on an input control predetermined in the session interface, display in the session interface the media content acquisition control matching the input information, and display, at a display position associated with the input control, at least one association effect associated with the input information.

In a third aspect, an electronic device is provided according to one or more embodiments of the present disclosure, including: at least one processor and a memory. The memory stores computer executable instructions. The at least one processor executes the computer executable instructions stored in the memory, to enable the at least one processor to perform the method of interface display according to the first aspect and various possible designs of the first aspect.

In a fourth aspect, a computer readable storage medium is provided according to one or more embodiments of the present disclosure. The computer readable storage medium stores computer executable instructions that, when executed by a processor, implement the method of interface display according to the first aspect and various possible designs of the first aspect.

In a fifth aspect, a computer program product is provided according to one or more embodiments of the present disclosure, including a computer program which, when executed by a processor, implements the method of interface display according to the first aspect and various possible designs of the first aspect.

The above description is only for the preferred embodiments of the present disclosure and an explanation of the technical principles used. Those skilled in the art should understand that the scope involved in the present disclosure is not limited to technical solutions formed by specific combinations of the foregoing technical features and should also cover other technical solutions formed by any combinations of the foregoing technical features or their equivalent features without departing from the disclosed concept. For example, a technical solution is formed by replacing the above features with (but not limited to) technical features with similar functions disclosed in the present disclosure.

Furthermore, although operations are depicted in a specific order, this should not be understood as requiring that these operations be performed in the specific order shown or performed in a sequential order. In certain environments, multitasking and parallel processing may be advantageous. Likewise, although several specific implementation details are included in the above discussion, these should not be interpreted as limitations on the scope of present disclosure. Certain features described in the context of individual embodiments may also be combined to be implemented in a single embodiment. On the contrary, various features described in the context of a single embodiment may also be implemented separately or in any suitable sub combination in multiple embodiments.

Although the present subject matter has been described in language specific to structural features and/or methodological logical actions, it should be understood that the subject matter defined in the attached claims may not necessarily be limited to the specific features or acts described above. On the contrary, the specific features and actions described above are only example forms of implementing the claims.

## Claims

1. A method of interface display, comprising:
in response to input information generated in a session interface associated with a first user and at least one second user, displaying, in the session interface, a media content acquisition control matching the input information;
in response to a first triggering on the media content acquisition control, displaying a media content acquisition interface, and displaying the input information in the media content acquisition interface;
acquiring a target media content generated in the media content acquisition interface, and sending the target media content into the session interface.

2. The method of claim 1, wherein displaying in the session interface the media content acquisition control matching the input information in response to the input information generated in the session interface associated with the first user and the at least one second user comprises:
acquiring the input information generated in the session interface;
detecting whether a target effect matching the input information is present, to acquire a detection result;
displaying, in the session interface, the media content acquisition control matching the detection result.

3. The method of claim 2, wherein detecting whether the target effect matching the input information is present to acquire the detection result comprises:
performing word segmentation on the input information to acquire a word segmentation result;
determining, based on the word segmentation result, a target keyword corresponding to the input information;
detecting whether a target effect matching the target keyword is present, to acquire the detection result.

4. The method of claim 2, wherein displaying in the session interface the media content acquisition control matching the detection result comprises:
in accordance with a determination that a target effect matching the input content is present, displaying a display content matching the target effect on the media content acquisition control; and/or
in accordance with a determination that no target effect matching the target keyword is present, displaying predetermined text information on the media content acquisition control.

5. The method of claim 1, wherein after displaying the input information in the media content acquisition interface, the method further comprises:
playing, in the media content acquisition interface, an audio corresponding to the input information, to enable the target media content to comprise the audio corresponding to the input information.

6. The method of claim 5, wherein after playing the audio corresponding to the input information corresponding to the input information in the media content acquisition interface, the method further comprises:
in response to a triggering on a predetermined adjustment control, adjusting an audio parameter of the audio corresponding to the input information, wherein the audio parameter comprises one or more of: a timbre parameter, a play speed parameter, or a tone parameter.

7. The method of claim 5, wherein after playing in the media content acquisition interface the audio corresponding to the input information corresponding to the input information, the method further comprises:
in response to a triggering on a predetermined closing control, stopping playing the audio corresponding to the input information.

8. The method of any of claims 1-7, wherein the media content acquisition control matching the input information comprises a first media content acquisition control, and displaying the media content acquisition interface in response to the first triggering on the media content acquisition control comprises:
in response to a first triggering on the first media content acquisition control, determining a target effect matching the input content;
displaying the target effect in the media content acquisition interface, to enable the first user to perform generation of the target media content based on the target effect.

9. The method of any of claims 1-7, wherein the media content acquisition control matching the input information comprises a second media content acquisition control, and displaying the media content acquisition interface in response to the first triggering on the media content acquisition control comprises:
in response to a first triggering on the second media content acquisition control, displaying the media content acquisition interface, to enable the first user to perform generation of the target media content based on a predetermined original camera in the media content acquisition interface.

10. The method of any of claims 1-7, wherein after displaying the media content acquisition interface in response to the first triggering on the media content acquisition control, the method further comprises:
in accordance with a determination that a target effect matching the input information is present, displaying, in a predetermined display area of the media content acquisition interface, identification information corresponding to the target effect.

11. The method of claim 10, wherein after displaying the identification information corresponding to the target effect in the predetermined display area of the media content acquisition interface, the method further comprises:
in response to a triggering on the identification information corresponding to the target effect, displaying an effect list in the media content acquisition interface,
wherein the effect list comprises at least one effect associated with the input information and a plurality of effects meeting a predetermined presentation condition.

12. The method of claim 11, wherein displaying the effect list in the media content acquisition interface comprises:
displaying a predetermined number of effects associated with the input information within a first display area predetermined in the effect list, and displaying the plurality of effects meeting the predetermined presentation condition within a second display area predetermined in the effect list.

13. The method of any of claims 1-7, wherein after displaying the media content acquisition control matching the input information in the session interface in response to the input information generated in the session interface associated with the first user and the at least one second user, the method further comprises:
in response to a second triggering on the media content acquisition control, displaying at least one association effect associated with the input information in the session interface;
in response to a selection on the at least one association effect, determining a selected target association effect;
displaying the target association effect in the media content acquisition interface, to enable the first user to perform generation of the target media content based on the target effect.

14. The method of any of claims 1-7, wherein displaying the media content acquisition control matching the input information in the session interface in response to the input information generated in the session interface associated with the first user and the at least one second user comprises:
in response to input information generated on an input control predetermined in the session interface, displaying in the session interface the media content acquisition control matching the input information, and displaying, at a display position associated with the input control, at least one association effect associated with the input information.

15. An apparatus for interface display, comprising:
a display module, configured to, in response to input information generated in a session interface associated with a first user and at least one second user, display in the session interface a media content acquisition control matching the input information;
a processing module, configured to, in response to a first triggering on the media content acquisition control, display a media content acquisition interface, and display the input information in the media content acquisition interface;
a sending module, configured to acquire a target media content generated in the media content acquisition interface, and send the target media content into the session interface.

16. An electronic device, comprising: a processor and a memory;
the memory storing computer executable instructions;
the processor executing the computer executable instructions stored in the memory, to enable the processor to be configured with the method of interface display according to any of claims 1 to 14.

17. A computer readable storage medium having stored thereon computer executable instructions that, when executed by a processor, implement the method of interface display according to any of claims 1 to 14.

18. A computer program product, comprising a computer program which, when executed by a processor, is configured with the method of interface display according to any of claims 1 to 14.
